# FASCICULE DE BREVET EUROPEEN

(11) **EP 3 912 861 B1**
(45) Date de publication et mention de la délivrance du brevet: **30.08.2023**
(21) Numéro de dépôt: 21174590.6
(22) Date de dépôt: 19.05.2021
(51) Int. Cl.: B60Q 1/00, B60Q 1/26, B60Q 1/30

(54) **RAMPE DE SIGNALISATION REPLIABLE POUR MACHINE AGRICOLE, TELLE QU'UNE CHARRUE ET MACHINE AGRICOLE ÉQUIPÉE D'UNE TELLE RAMPE**
KLAPPBARE SIGNALISIERUNGSRAMPE FÜR EINE LANDWIRTSCHAFTLICHE MASCHINE, WIE Z. B. EINEN PFLUG, UND LANDWIRTSCHAFTLICHE MASCHINE, DIE MIT EINER SOLCHEN RAMPE AUSGESTATTET IST
FOLDING SIGNALLING RAMP FOR AN AGRICULTURAL MACHINE, SUCH AS A PLOUGH, AND AGRICULTURAL MACHINE EQUIPPED WITH SUCH A RAMP

(30) Priorité: 20.05.2020 FR 2005132
(43) Date de publication de la demande: 24.11.2021
(73) Titulaire: Kuhn-Huard S.A.S, 44110 Chateaubriant (FR)
(72) Inventeur: DUCROQUET, Frédéric, 44110 VILLEPOT (FR); BUTIN, Cyril, 89130 MEZILLES (FR); DELAUNAY, Frank, 44110 SOUDAN (FR)
(74) Mandataire: Cabinet Nuss

(56) Documents cités:
- EP-A1- 3 263 401
- FR-A1- 3 005 621
- US-A- 2 324 614
- US-A- 3 683 842
- US-A1- 2018 354 413

## Description

[La présente invention concerne le domaine de la circulation et du transport de machines agricoles, plus particulièrement les charrues, équipées d'éléments signalisation à l'arrière et a pour objet une rampe de signalisation repliable pour machine agricole, telle qu'une charrue. Elle a également pour objet une machine agricole, telle qu'une charrue, équipée d'une telle rampe.

Les éléments de signalisation du véhicule tractant une machine agricole, tels que par exemple les feux, les triangles, les plaques catadioptres ou les faisceaux, sont généralement masqués en partie ou totalement par ce dernier. Les machines22.3 agricoles doivent par conséquent être équipées d'éléments de signalisation pour être visibles et répondre aux normes routières en vigueur afin de permettre leur déplacement sur les routes. Ces éléments de signalisation sont généralement montés sur une rampe de signalisation disposée à l'arrière de la machine agricole perpendiculairement à l'axe longitudinal de la machine.

Dans le cas d'une machine agricole du type charrue circulant sur la route, celle-ci est mise en position de transport, c'est-à-dire que les socs de labour sont orientés à plat au-dessus du bâti qui s'appuie généralement sur le sol, au niveau de sa partie arrière, via une roue. Les deux positions de travail de la charrue réversible sont obtenues par pivotement puisque les corps de labour sont pivotés de 90° vers le haut ou vers le bas, ce qui entraîne également un pivotement de 90° de la rampe de signalisation.

Un problème rencontré avec ce type de machine agricole, telle qu'une charrue, est que les éléments de signalisation sont exposés à la terre, aux résidus, cailloux, mottes ou autres débris provenant du sol travaillé, notamment lors du labour. Une conséquence de cette exposition peut être l'arrachement ou la détérioration des éléments de signalisation dont l'emplacement est incompatible avec, ou peu adapté, aux positions de travail de la charrue.

Pour pallier cet inconvénient, il a été proposé, dans le document FR3005621 un dispositif de signalétique pour outils (machines) agricoles attelés derrière un tracteur ou autre, du type portés ou semi-portés, se présentant sous la forme d'une rampe comprenant des moyens de signalisation et de visualisation obligatoires disposés à l'arrière de l'outil. La rampe comprend des éléments qui portent lesdits moyens de signalisation et sont escamotables les uns par rapport à au moins un autre par pivotement et/ou coulissement en sorte que la rampe puisse passer d'une configuration déployée permettant la circulation routière à une configuration repliée permettant l'utilisation de l'outil en position de travail. Dans la configuration repliée de la rampe, l'un au moins des éléments est configuré pour loger au moins en partie le ou les éléments escamotables ou rabattables.

A l'état monté à l'arrière d'un outil agricole, une rampe du type de celle divulguée dans le document FR3005621 s'étend, dans une position de transport de l'outil/machine agricole et dans la configuration déployée de ladite rampe, le long d'un axe de rampe horizontal et perpendiculaire à l'axe longitudinal ou à la direction d'avance dudit outil agricole. Dans une position de travail de l'outil, l'axe de rampe est orienté verticalement, ainsi que les éléments escamotables qui sont repliés parallèlement à ce dernier.

Toutefois, une telle rampe escamotable du type de celle décrite dans le document FR3005621, dont les éléments escamotables sont repliés verticalement l'un à côté de l'autre en position de travail de la machine, présente une hauteur importante qui ne permet pas d'obtenir un dégagement suffisant par rapport au sol pour protéger les moyens de signalisation.

Un autre problème qui doit être pris en considération dans la recherche d'une solution de rampe de signalisation pour de telles machines agricoles, telles que les charrues, est que la trajectoire des éléments repliables de la rampe doit être libérée d'obstacles tels que les pièces constituant la machine dans la partie arrière de celle-ci où est montée la rampe.

Le document EP 3 263 401 a pour objet une unité de panneau arrière conçue pour être montée sur une remorque, notamment pour bateau, présentant notamment les inconvénients de trajectoire précités. Cette unité de panneau arrière comprend, d'une part, une partie principale et une partie auxiliaire reliées entre elles par des moyens de liaison et, d'autre part, une poutre sur laquelle est montée ladite unité et plus particulièrement la partie principale. La partie auxiliaire comprend des éléments de signalisation tels qu'une unité de lampe et/ou une plaque d'immatriculation. L'unité de panneau arrière est adaptée pour pouvoir être déplacée dans une première position dans laquelle la remorque est prête à l'emploi et dans une deuxième position dans laquelle elle laisse une voie libre pour le chargement du bateau à l'arrière de la remorque. Son déplacement, depuis la première position (position déployée) à la deuxième position (position repliée), est réalisé successivement tout d'abord vers l'arrière de la machine suivant un mouvement de translation puis vers l'avant et sur le côté par un mouvement de pivotement.

La présente invention a pour but de pallier ces inconvénients en proposant une rampe de signalisation repliable présentant, dans la configuration repliée de la rampe lorsque celle-ci est montée à l'arrière d'une machine agricole, telle qu'une charrue, et dans la position de travail de cette dernière, une plus grande compacité en hauteur permettant un plus grand dégagement avec le sol, ceci afin de mieux protéger les éléments de signalisation de la rampe, tout en offrant une trajectoire de repliement permettant d'éviter les pièces constitutives de la machine.

A cet effet, la rampe de signalisation repliable, selon la présente invention, pour machine agricole, telle qu'une charrue, ladite rampe, d'une part étant apte à être montée à l'arrière d'une telle machine et à être mise dans une configuration déployée en position de transport de ladite machine agricole en s'étendant longitudinalement le long d'un axe, dit axe de rampe, horizontal et orienté perpendiculairement à un axe longitudinal d'extension de l'arrière vers l'avant de la machine ou à la direction d'avance de ladite machine et dans une configuration repliée et, d'autre part, présentant, dans la configuration déployée, deux faces latérales opposées parallèles à l'axe de rampe, à savoir une face arrière de signalisation définissant un plan de référence et comprenant des moyens de signalisation et une face avant destinée à assurer la fixation de la rampe sur la machine, se caractérise essentiellement en ce qu'elle comprend un support central comportant au moins une extrémité de liaison, au moins un bras articulé sur l'extrémité de liaison grâce à au moins une articulation constituée d'une liaison pivot et d'une liaison glissière permettant d'assurer un mouvement combiné du bras successivement en pivotement, au moyen de la liaison pivot, depuis une position déployée du bras, dans la configuration déployée de la rampe, dans laquelle il s'étend parallèlement à l'axe de rampe jusqu'à une position repliée intermédiaire du bras dans laquelle il s'étend du côté de la face arrière perpendiculairement au plan de référence puis, en translation, au moyen de la liaison glissière, dans la direction axiale dudit bras, depuis la position repliée intermédiaire jusqu'à une position repliée finale du bras, dans la configuration repliée de la rampe, dans laquelle il s'étend du côté de la face avant perpendiculairement au plan de référence et réciproquement et des moyens de verrouillage du ou de chaque bras dans sa position déployée et dans sa position repliée finale.

La présente invention a également pour objet une machine agricole, telle qu'une charrue, ladite machine s'étendant, de l'arrière vers l'avant, le long d'un axe longitudinal et étant apte à être déplacée suivant une direction d'avance et à être mise dans une position de travail et dans une position de transport et étant équipée d'une rampe de signalisation montée à l'arrière de ladite machine.

Une telle machine agricole, selon la présente invention, se caractérise essentiellement en ce que ladite rampe de signalisation consiste en une rampe de signalisation selon la présente invention et en ce que, en position de transport de la machine, le ou chaque bras en position déployée est orienté perpendiculairement à l'axe longitudinal de la machine et en ce que, en position de travail de la machine, le ou chaque bras en position repliée finale est orienté vers l'avant parallèlement à l'axe longitudinal ou à ladite direction d'avance.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue en perspective de la rampe de signalisation selon la présente invention, du côté de sa face arrière, dans la configuration déployée et verrouillée de la rampe comprenant deux bras,
[Fig. 2] montre la rampe de signalisation représentée sur la figure 1 à l'état déverrouillé de la rampe et dans sa position déployée et déverrouillée de pré-positionnement en vue de son repliement dans la position repliée intermédiaire, sans les plaques de protection,
[Fig. 3] montre la rampe de signalisation représentée sur la figure 2 dans la position repliée intermédiaire suite au pivotement des bras autour des pivots des articulations et en vue de leur translation vers la position repliée finale,
[Fig. 4] montre la rampe de signalisation représentée sur la figure 3 dans la position repliée finale des bras avant leur verrouillage dans ladite position,
[Fig. 5] montre une vue en plan de dessus de la rampe de signalisation représentée dans la position repliée finale et verrouillée,
[Fig. 6] montre une vue en perspective de trois quart de dessous de la rampe de signalisation représentée sur la figure 5,
[Fig. 7] montre une vue en perspective de trois quart de dessous de la rampe de signalisation représentée sur la figure 3,
[Fig.8] montre une vue en perspective de la rampe de signalisation représentée sur la figure 1, du côté de sa face avant qui comprend une interface de fixation permettant la fixation de la rampe à l'arrière d'une machine agricole telle qu'une charrue,
[Fig. 9] représente une machine agricole, du type charrue, selon la présente invention, équipée d'une rampe de signalisation représentée sur la figure 1 et montée à l'arrière de la machine, en position de transport de cette dernière avec les corps de labour orientés à plat et dans la configuration déployée de la rampe dont l'axe de rampe est horizontal et s'étend perpendiculairement à la direction d'avance de la machine,
[Fig. 10] montre les quatre dernières paires de corps de labour de la charrue représentée sur la figure 9 en position de travail et dans la configuration repliée finale et verrouillée de la rampe avec l'axe de rampe orienté verticalement.

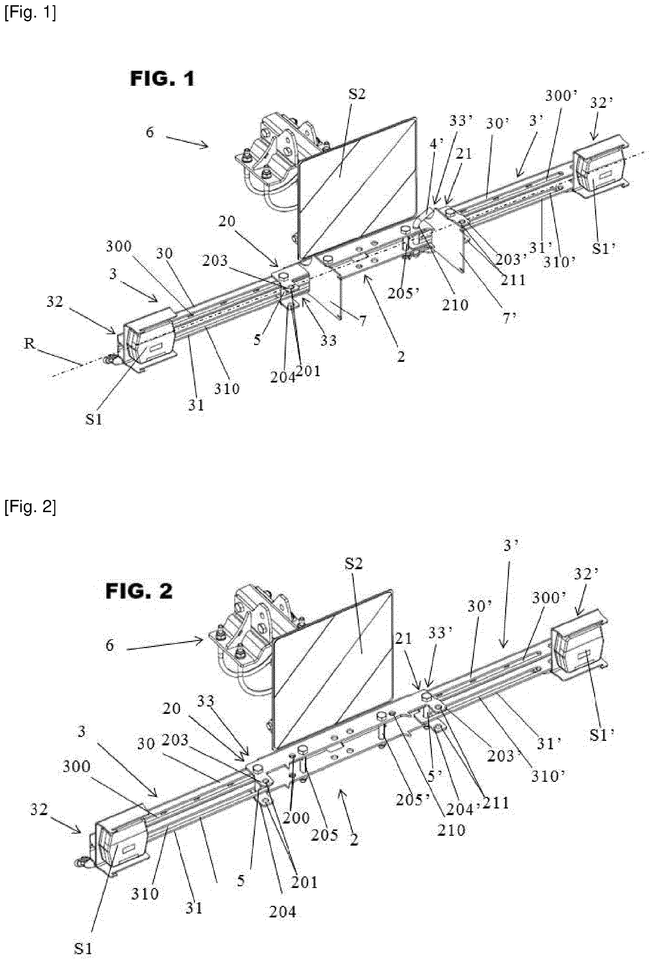

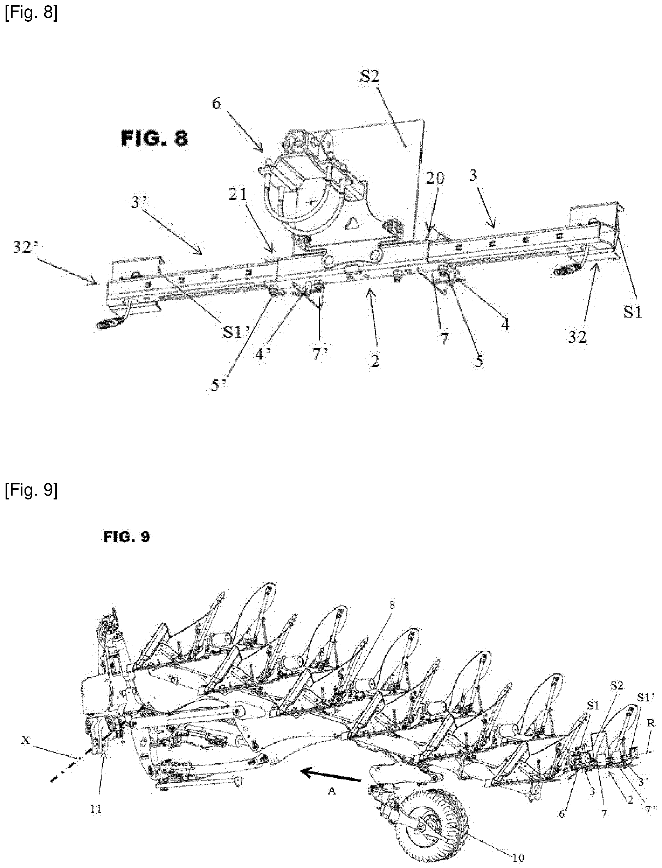

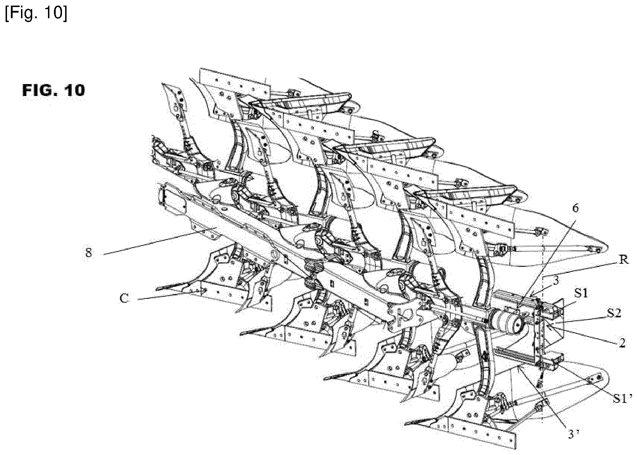

Les figures annexées montrent une rampe de signalisation repliable, selon la présente invention, pour machine 1 agricole, telle qu'une charrue, ladite rampe, d'une part étant apte à être montée à l'arrière d'une telle machine et à être mise dans une configuration déployée (figures 1, 2, 8 et 9) en s'étendant longitudinalement le long d'un axe, dit axe de rampe R et dans une configuration repliée (figures (3, 4, 5, 6, 7, et 10) et, d'autre part, présentant, dans la configuration déployée, deux faces latérales opposées parallèles à l'axe de rampe, à savoir une face arrière de signalisation définissant un plan de référence et comprenant des moyens de signalisation S1, S1', S2 et une face avant destinée à assurer la fixation de la rampe sur la machine 1. La face avant peut comprendre une interface de fixation 6 pour permettre la fixation de ladite rampe sur la machine 1 (figures 9 et 10).

Conformément à la présente invention, une telle rampe comprend un support central 2 comportant au moins une extrémité de liaison 20, 21, au moins un bras 3, 3' articulé sur l'extrémité de liaison 20, 21 grâce à au moins une articulation 5, 300, 310, 5', 300', 310' constituée d'une liaison pivot 5, 300, 310, 5', 300', 310' et d'une liaison glissière 5, 300, 310, 5', 300', 310' permettant d'assurer un mouvement combiné du bras 3, 3' successivement en pivotement, au moyen de la liaison pivot 5, 300, 310, 5', 300', 310', depuis une position déployée du bras 3, 3', dans la configuration déployée de la rampe, dans laquelle il s'étend parallèlement à l'axe de rampe R jusqu'à une position repliée intermédiaire du bras 3, 3' dans laquelle il s'étend du côté de la face arrière perpendiculairement au plan de référence puis, en translation, au moyen de la liaison glissière 5, 300, 310, 5', 300', 310', dans la direction axiale dudit bras, depuis la position repliée intermédiaire jusqu'à une position repliée finale du bras 3, 3', dans la configuration repliée de la rampe, dans laquelle il s'étend du côté de la face avant perpendiculairement au plan de référence et réciproquement.

On comprendra que, réciproquement, le passage de la configuration repliée de la rampe à la configuration déployée sera effectué par un mouvement combiné inverse du ou de chaque bras 3, 3', c'est-à-dire successivement en translation axiale, depuis la position repliée finale du ou de chaque bras 3, 3', dans la configuration repliée de la rampe, suivant une direction perpendiculaire au plan de référence, jusque dans ladite position repliée intermédiaire du ou de chaque bras 3, 3', puis en pivotement, depuis la position repliée intermédiaire jusque dans la position déployée du ou de chaque bras 3, 3', dans la configuration déployée de la rampe.

Toujours conformément à la présente invention, une telle rampe comprend en outre des moyens de verrouillage 4, 4', de préférence amovibles, permettant de verrouiller le ou chaque bras 3, 3' dans sa position déployée et dans sa position repliée finale. Le verrouillage dans la position repliée intermédiaire n'est pas nécessaire puisqu'il s'agit uniquement d'une position temporaire entre la position déployée et la position repliée finale. Les moyens de verrouillage 4, 4' peuvent consister en un ou plusieurs éléments de verrouillage, de préférence amovible(s), tels que des broches, goujons ou goupilles. Ces éléments de verrouillage peuvent s'étendre, à l'état de verrouillage, parallèlement aux pivots 5, 5'.

Dans un mode de réalisation préférentiel de la rampe de signalisation, tel que représenté sur toutes les figures annexées, celle-ci comprend deux bras 3, 3' et deux articulations 5, 300, 310, 5', 300', 310' associées. En outre, le support central 2 comprend deux extrémités de liaison 20, 21. De préférence, ces deux extrémités de liaison 20, 21 sont alignées dans la direction de l'axe de rampe R. L'un des deux bras 3 est articulé, au moyen de l'une des deux articulations 5, 300, 310, sur l'une des extrémités de liaison 20 et l'autre bras 3' est articulé, au moyen de l'autre articulation 5', 300', 310', sur l'autre extrémité de liaison 21. De préférence, en position déployée des deux bras 3, 3', c'est-à-dire dans la configuration déployée de la rampe, les deux bras 3, 3' s'étendent de part et d'autre du support central 2, de préférence sur le même axe, ou sensiblement sur le même axe, parallèlement à l'axe de rampe R. La rampe de signalisation est préférentiellement symétrique.

De préférence, la ou chaque extrémité de liaison 20, 21 du support central 2 comprend un pivot 5, 5' autour duquel peut pivoter le ou l'un des bras 3, 3'. Le ou chaque pivot 5, 5' est orienté parallèlement au plan de référence et perpendiculairement à l'axe de rampe R. En outre, on peut voir que, dans une forme préférentielle du ou de chaque bras 3, 3', celui-ci peut comprendre au moins une lumière de guidage 300, 310, 300', 310' oblongue traversée par le pivot 5, 5' et formant une coulisse apte à coopérer avec ledit pivot 5, 5' pour former la liaison pivot 5, 300, 310, 5', 300', 310' et la liaison glissière 5, 300, 310, 5', 300', 310'. D'une manière avantageuse, la largeur de la rampe de signalisation, dans sa configuration déployée, est réglable en fonction de l'encombrement en largeur de la machine. La position des bras 3, 3' peut être verrouillée dans plusieurs positions grâce aux lumières de guidage 300, 310, 300', 310', aux butées 205, 205' et aux logements de verrouillage 200, 201, 210, 211.

Dans une forme préférentielle du ou de chaque bras 3, 3', celui-ci comprend deux lumières de guidage en vis-à-vis 300, 310, 300', 310' traversées par le pivot 5, 5' autour duquel est articulé le bras 3, 3'. En outre, le ou chaque bras 3, 3' peut consister en un profilé allongé de section transversale en forme de U dont les deux ailes parallèles forment deux ailes de liaison 30, 31, 30', 31' dans chacune desquelles est pratiquée longitudinalement l'une des deux lumières 300, 310, 300', 310'. Dans une alternative, le profil allongé de chaque bras 3, 3' dispose d'une section carrée ou rectangulaire.

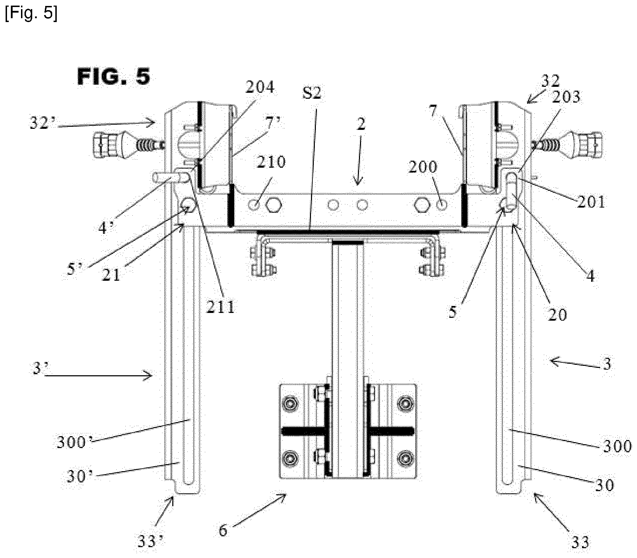

De préférence, la ou chaque extrémité de liaison 20, 21 du support central 2 peut comprendre deux logements de verrouillage 200, 201, 210, 211 aptes chacun à recevoir le ou l'un des éléments de verrouillage 4, 4', à savoir un premier logement de verrouillage 200, 210 dédié au verrouillage du bras 3, 3' dans la position déployée (figures 1 8 et 9) et un deuxième logement de verrouillage 201, 211 dédié au verrouillage du bras 3, 3' dans la position repliée finale (figures 5, 6 et 10). Les deux logements de verrouillage 200, 201,210, 211 de la ou chaque extrémité de liaison 20, 21 peuvent être situés de part et d'autre du pivot 5, 5' de ladite extrémité de liaison 20, 21 en étant décalés latéralement, de préférence de 90°, par rapport au pivot 5, 5'. Plus particulièrement, un tel décalage latéral peut se traduire par le fait que le premier logement de verrouillage 200, 210 et le pivot 5, 5' sont alignés parallèlement à l'axe de rampe R pour permettre le verrouillage du bras 3, 3' dans sa position déployée (figures 1, 8 et 9). Le deuxième logement de verrouillage 201, 211 et le pivot 5, 5' peuvent être alignés perpendiculairement à l'axe de rampe R de sorte à permettre le verrouillage du bras 3, 3' dans sa position repliée finale (figures 5, 6 et 10).

De préférence, selon une caractéristique additionnelle de la présente invention, la ou chaque articulation 5, 300, 310, 5', 300', 310' et la ou chaque extrémité de liaison 20, 21 peuvent être configurées pour permettre en outre une translation du ou de chaque bras 3, 3', au moyen de la liaison glissière 5, 300, 310, 5', 300', 310', suivant la direction de l'axe de rampe R, vers l'extérieur de ladite extrémité de liaison 20, 21, depuis la position déployée verrouillée du ou de chaque bras 3, 3' jusqu'à une position déployée déverrouillée de pré-positionnement (figure 2) autorisant/permettant son pivotement, au moyen de la liaison pivot 5, 300, 310, 5', 300', 310', jusqu'à sa position repliée intermédiaire et réciproquement. Dans cette position déployée déverrouillée de pré-positionnement, on peut voir sur la figure 2 que chaque bras 3, 3', et plus particulièrement l'une des extrémités de la ou de chaque lumière de guidage 300, 310, 300', 310', vient en butée contre le pivot 5, 5' de l'extrémité de liaison 20, 21 correspondante.

On comprendra que la translation du ou de chaque bras 3, 3' de la position déployée verrouillée (figure 1) vers la position déverrouillée de pré-positionnement (figure 2) est effectuée dans une direction qui dépend de l'orientation de l'axe de rampe R. Par exemple si celui-ci est vertical et que par conséquent l'une des extrémités de liaison 21 est située sous l'autre extrémité de liaison 20, la translation du ou de chaque bras 3, 3' sera effectuée vers le bas ou vers le haut selon que celui-ci est articulé sur l'extrémité de liaison 21 inférieure ou sur l'extrémité de liaison 20 supérieure.

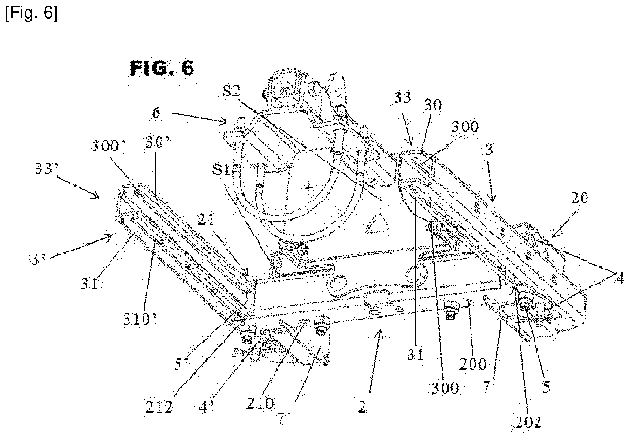

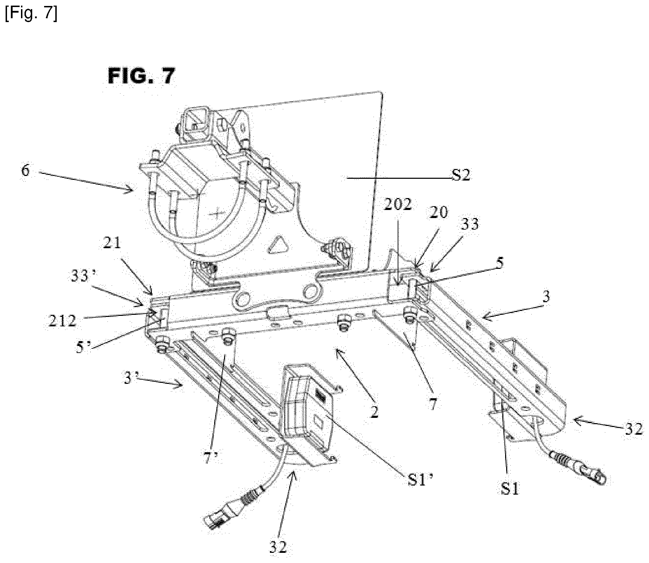

D'autre part, pour permettre la translation du ou de chaque bras 3, 3' à travers la ou chaque extrémité de liaison 20, 21, depuis sa position repliée intermédiaire vers sa position repliée finale et réciproquement, la ou chaque extrémité de liaison 20, 21 du support central 2 peut comprendre au moins une ouverture latérale 202, 212 permettant le déplacement du ou de l'un des bras 3, 3' à travers cette dernière (voir notamment les figures 6 et 7).

Le ou chaque bras 3, 3' comprend une première extrémité 32, 32' et une deuxième extrémité 33, 33'.

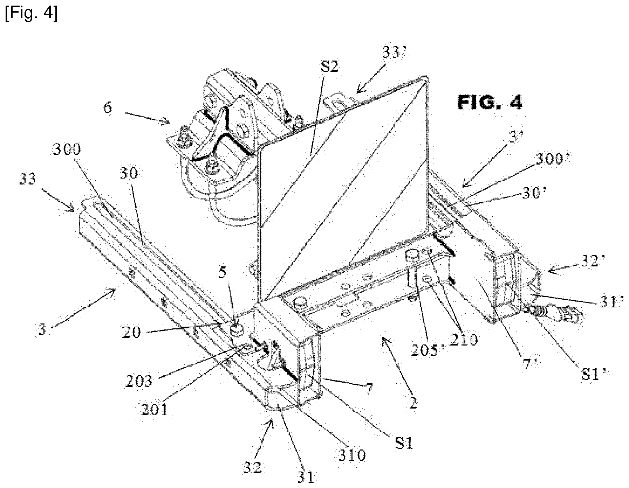

Une conséquence du mouvement combiné selon la présente invention est que, en position déployée du ou de chaque bras 3, 3' (figures 1, 2, 8, 9 et 10), la première extrémité 32, 32' est l'extrémité la plus éloignée de l'extrémité de liaison 20, 21 à laquelle est articulé le ou chaque bras 3, 3' et, en position repliée finale, verrouillée (figures 5, 6 et 10) ou non (figure 4), du ou de chaque bras 3, 3', la deuxième extrémité 33, 33' est l'extrémité la plus éloignée de ladite extrémité de liaison 20, 21.

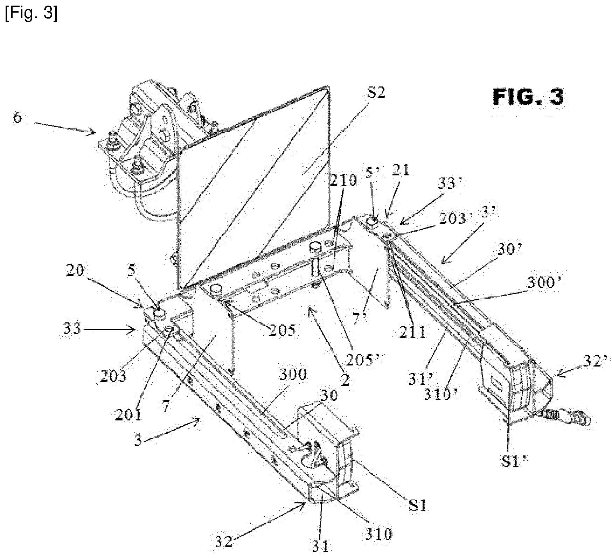

La première extrémité 32, 32' du ou de chaque bras 31, 31' peut être prévue préférentiellement pour porter un élément de signalisation S1, S1', tel qu'un feu de signalisation. Le passage d'une position déployée à une position repliée du bras 3, 3' est effectué sans nécessité d'opérations spécifiques de branchement/débranchement des fils électriques alimentant les feux de signalisation. En outre, la ou chaque extrémité de liaison 20, 21 du support central 2 peut comporter une plaque de protection 7, 7' s'étendant perpendiculairement à l'axe de rampe R de sorte, qu'en position repliée finale du ou des bras 3, 3', la plaque de protection 7, 7' peut se trouver en regard de ou contre l'élément de signalisation S1, S1' et assurer sa protection contre des débris venant du sol, plus particulièrement lors du travail de la machine, notamment, lors du labour de la charrue équipée d'une telle rampe de signalisation selon la présente invention. Un autre avantage est que, le poids des éléments de signalisation S1, S1' montés sur le ou les bras 3, 3', ajouté éventuellement au poids de la terre qui pourrait se déposer sur lesdits éléments de signalisation S1, S1', lors du travail de la machine 1, n'engendre pas d'effort sur le ou les bras 3, 3' puisque la première extrémité 32, 32' qui porte un élément de signalisation S1, S1' en bout de bras 3, 3' en position déployée de ce dernier (figures 1, 2, 8 et 9), ainsi que dans la position repliée intermédiaire (figures 3 et 7), est déplacée à proximité immédiate de l'extrémité de liaison 20, 21 du support central 2 en position repliée finale du bras 3, 3' (figures 4, 5, 6 et 10) supprimant par là même tout problème de porte-à-faux.

La rampe de signalisation selon la présente invention peut comprendre en outre un système d'inclinaison permettant de régler l'inclinaison de la rampe autour d'un axe horizontal en configuration déployée et dans la position de transport de la machine 1 agricole pour le transport sur route.

Dans un mode de réalisation préférentiel du support central 2, comme on peut le voir sur toutes les figures annexées, celui-ci peut comprend un profilé en forme de U s'étendant parallèlement à ou dans l'axe de rampe R. Au moins l'une des extrémités dudit profilé peut alors former la ou l'une des extrémités de liaison 20, 21. Le ou chaque pivot 5, 5' peut être monté dans l'extrémité de liaison 20, 21 correspondante, par exemple en étant fixé sur les deux ailes du U perpendiculairement à ces dernières (voir notamment les figures 1, 2, 6 et 7). En outre au moins l'une des extrémités du profilé 20, 21 peut comporter au moins une patte latérale de verrouillage 203, 204, 203', 204' s'étendant latéralement vers l'extérieur du profilé, de préférence du côté de la face arrière de la rampe, au niveau du pivot 5, 5'. La ou chaque patte de verrouillage 203, 204, 203', 204' peut comprendre un orifice formant le deuxième logement de verrouillage 201, 211 dédié au verrouillage du bras 3, 3' dans la position repliée finale. De préférence, la ou chaque extrémité de liaison 20, 21 peut comporter deux pattes latérales de verrouillage 203, 204, 203', 204' en vis-à-vis s'étendant chacune de l'une des ailes du U et comportant chacune un orifice de sorte à obtenir deux orifices en vis-à-vis formant le deuxième logement 201, 211.

De préférence, le ou chaque bras 3, 3' est inséré de manière coulissante et pivotante dans la ou l'une des extrémité de liaison 20, 21 du profilé en U du support central 2 de sorte à permettre, d'une part, l'articulation du bras 3, 3' autour du pivot 5, 5' et la translation, par coulissement, du bras 3, 3' à travers les ouvertures latérales 202, 212 depuis sa position repliée intermédiaire vers sa position repliée finale et réciproquement et, d'autre part, le cas échéant, la translation, par coulissement, du bras 3, 3' dans le profilé en U pour permettre son pré-positionnement en position déployée vers sa position repliée intermédiaire et réciproquement.

En outre, de préférence la ou chaque extrémité de liaison 20, 21 peut comprendre une butée interne 205, 205' disposée de sorte que le premier logement de verrouillage 210, 210' soit situé entre ladite butée interne 205, 205' et le pivot 5, 5' de l'extrémité de liaison correspondante. Une telle butée interne 205, 205' a pour effet d'empêcher la translation du bras 3, 3' vers l'intérieur du support central 2 au-delà de ladite butée interne 205, 205' afin de le bloquer en verrouillage dans sa position déployée dans la configuration de verrouillage de la rampe. Une telle butée interne 205, 205' peut consister, par exemple, en une broche, un goujon ou une goupille.

D'autre part, un élément de signalisation S2 se présentant sous la forme d'une plaque ou d'un élément plan peut être fixé sur le profilé en U du support central 2, par exemple en surmontant ce dernier parallèlement au plan de référence. L'élément de signalisation S2 peut être fixé sur la face arrière de l'une des deux ailes du U, de préférence sur son aile supérieure si l'on considère une orientation horizontale de l'axe de rampe R où les deux ailes du U sont superposées, comme on peut le voir sur les figures annexées. Un tel élément de signalisation S2 plan peut définir le plan de référence. L'élément de signalisation S2 peut être, par exemple, une plaque hachurée qui signale un chargement ou un encombrement qui dépasse. Par ailleurs, la rampe de signalisation peut également être équipée d'un ou plusieurs dispositifs rétro réfléchissants. La rampe de signalisation peut éventuellement aussi servir à recevoir une plaque d'identification du type plaque d'immatriculation. Cette plaque d'identification est alors montée sur le support central 2.

Si on se réfère aux figures 9 et 10, on peut voir que la présente invention a également pour objet une machine 1 agricole, telle qu'une charrue, et que ladite machine 1 s'étend, de l'arrière vers l'avant, le long d'un axe longitudinal et est apte à être déplacée suivant une direction d'avance A et à être mise dans une position de travail (figure 10) et dans une position de transport (figure 9). Une telle machine 1 est équipée d'une rampe de signalisation montée à l'arrière de ladite machine 1. Dans la configuration déployée de la rampe, en position de transport de la machine 1, l'axe de rampe R peut s'étendre horizontalement dans une situation où la machine 1 repose ou évolue sur ou au-dessus d'un sol horizontal.

Une telle machine 1 peut être prévue pour être attelée derrière un véhicule, tel qu'un tracteur ou autre, non représenté sur les figures, et peut s'appuyer sur le sol via au moins une roue 10 (figure 9). La machine 1 peut être reliée audit véhicule au moyen d'un attelage trois points (figure 9). La machine agricole 1 est une charrue du type portée lorsque l'ensemble du poids de la charrue est supporté par le tracteur. Lorsque le tracteur ne supporte qu'une partie du poids de la charrue, il s'agit d'une charrue semi-portée. Dans ce cas l'autre partie du poids est supportée par au moins une roue 10. L'axe de rampe R est sensiblement parallèle à l'axe de la(des) roue(s) 10 en position de transport de la charrue.

Conformément à la présente invention, dans une telle machine 1 agricole, la rampe de signalisation consiste en une rampe de signalisation selon la présente invention. En position de transport de la machine 1, comme on peut le voir sur la figure 9, le ou chaque bras 3, 3' en position déployée, c'est-à-dire dans la configuration déployée de la rampe, est orienté perpendiculairement à l'axe longitudinal ou à la direction d'avance A de la machine 1. En position de travail de la machine 1, comme on peut le voir sur la figure 10, c'est-à-dire dans la configuration repliée de la rampe, le ou chaque bras 3, 3' en position repliée finale est orienté vers l'avant parallèlement à l'axe longitudinal ou à la direction d'avance A de la machine 1. En outre, en position de transport ou de travail de la machine 1, le ou chaque bras 3, 3' en position repliée intermédiaire est orienté vers l'arrière parallèlement à l'axe longitudinal ou à la direction d'avance A de la machine 1.

Si on se réfère à la figure 9 on peut voir que la direction d'avance A est perpendiculaire à l'axe X passant par les deux points d'attelage inférieurs d'un attelage trois points 11 reliant la machine 1 à un véhicule, par exemple, du type tracteur. L'axe longitudinal de la machine 1 est donc également perpendiculaire audit axe X passant par les deux points d'attelage inférieurs. L'axe longitudinal de la machine 1 est aligné avec l'axe médian du véhicule tel qu'un tracteur lorsque celle-ci est attelée à ce dernier.

De préférence, comme on peut le voir sur les figures 9 et 10, la rampe de signalisation, selon la présente invention, équipant une telle machine comprend deux bras 3, 3' et deux articulations 5, 300, 310, 5', 300', 310' associés comme définis précédemment dans la description de ladite rampe. Dans la position de travail de la machine 1, dans la configuration repliée de la rampe, les deux bras 3, 3' orientés vers l'avant sont disposés l'un au-dessus de l'autre (figure 12).

De préférence, la présente invention peut prévoir que, dans la position de travail de la machine 1, dans la configuration repliée de la rampe, cette dernière soit configurée, en forme et en dimensions, pour ne pas s'étendre pas au-delà de l'encombrement en longueur de la machine 1 (figure 12).

Une machine 1 agricole, telle qu'une charrue, comprend habituellement une pièce maîtresse 8 longitudinale, telle qu'une longue barre ou poutre (age), sur laquelle sont fixés les différents éléments C tels que les socs ages ou corps de labour de la charrue. La charrue 1 représentée sur les figures 9 et 10 est du type réversible dans laquelle la pièce maîtresse 8 possède deux positions de travail différentes obtenues par retournement de la pièce maîtresse 8 suivant un quart de tour ou un demi-tour. Les corps de labour sont montés par paire sur la pièce maîtresse 8 de manière à constituer deux ensembles de corps de labour disposés respectivement sur deux côtés différents de la pièce maîtresse 8. Dans le cas d'une charrue, la pièce maîtresse 8 fait un angle par rapport à la direction d'avance A de la machine 1 en position de travail ou du tracteur tractant ou portant cette dernière, de manière à ce que la terre retournée par le corps de labour tombe dans le sillon formé par le corps précédent. L'interface de fixation 6 de la rampe peut alors être fixée, directement ou par l'intermédiaire d'une pièce de liaison, sur ladite pièce maîtresse 8.

La présente invention peut encore prévoir de manière avantageuse que la rampe de signalisation soit utilisable ou compatible avec un dispositif de sécurité évitant la rupture d'une pièce de la machine 1, telle qu'un age ou un corps de labour d'une charrue, équipée de ladite rampe, en cas de rencontre d'un obstacle dans le sol, plus particulièrement par boulons de traction (sécurité T), sécurité non-stop hydraulique (sécurité NSH) ou autres.

En fonctionnement, dans une telle machine 1 agricole, le passage de la configuration déployée à la configuration repliée de la rampe de signalisation, selon la présente invention, peut être réalisé dans la position de transport de la machine 1 agricole ou dans l'une de ses positions de travail, par exemple lorsque l'un des deux ensembles de corps de labour s'appuie sur le sol dans le cas où la machine 1 est une charrue réversible. La figure 10 représente la charrue 1 dans une position de travail dite côté droit, puisque les corps de labour sont situés du côté droit de la pièce maîtresse 8. Un tel passage peut consister :
- dans la configuration déployée de la rampe, à déverrouiller le ou chaque bras 3, 3' en position déployée verrouillée (figures 1, 8 et 9), par exemple en retirant le ou les éléments de verrouillage 4, 4' de leurs logements respectifs 201, 210, puis
- le cas échéant, à translater axialement le ou chaque bras 3, 3' suivant l'axe de rampe R depuis la position déployée verrouillée jusqu'à la position déployée déverrouillée de pré-positionnement (figure 2) en vue de son pivotement vers la position repliée intermédiaire (figures 3 et 7),
- puis à pivoter le ou chaque bras 3, 3' autour du ou de chaque pivot 5, 5' vers l'arrière pour le déplacer dans la position repliée intermédiaire (figures 3 et 7), puis
- à translater axialement le ou chaque bras 3, 3' vers l'avant, dans la direction axiale dudit bras, depuis sa position repliée intermédiaire jusqu'à sa position repliée finale (figures 4, 5, 6 et 9),
- à verrouiller le ou chaque bras 3, 3' dans sa position repliée finale pour verrouiller la rampe dans sa configuration repliée, par exemple en insérant les broches dans leurs logements respectifs (figures 5, 6 et 9).

Une telle rampe de signalisation selon la présente invention permet, à l'état monté à l'arrière d'une telle machine 1, de réaliser un mouvement de pivotement uniquement lors du repliement du ou de chaque bras 3, 3' vers l'arrière, puisque le déplacement de ces derniers vers l'avant est réalisé par translation, ce qui laisse la place de manipuler le ou les bras 3, 3' aisément et sans contacts avec d'autres pièces qui se trouveraient sur la trajectoire du pivotement du ou des bras 3, 3' si ces derniers étaient pivotés directement vers l'avant depuis leur position déployée. La translation du ou des bras 3, 3' vers l'avant, c'est-à-dire le fait de ne pas laisser le ou les bras 3, 3' dans la position repliée intermédiaire vers l'arrière, permet d'éviter d'être déporté sur l'arrière. Au contraire, un système effectuant un repliement, notamment par pivotement, directement vers l'avant depuis la configuration déployée de la rampe, c'est-à-dire sans passer par la position repliée intermédiaire, entraînerait un effet de balayage vers l'avant qui, dans certaines configurations, empêcherait au système de se replier ou entraînerait des risques de collisions avec des pièces de la partie arrière de la machine 1. En outre, un tel système avec repliement par pivotement vers l'avant ne permettrait pas ou difficilement de protéger les feux fixés sur les bras 3, 3', notamment sur leur deuxième extrémité ou extrémité libre, en cas de chute de terre lors des phases de retournement de la machine 1 et notamment lorsque celle-ci consiste en une charrue.

En outre, la rampe, selon la présente invention, offre un maintien plus important qu'avec les rampes actuelles, grâce au(x) pivots et aux moyens de verrouillage en position de transport de la machine 1.

De manière générale, il est rappelé que la fonction de base d'une rampe de signalisation est de porter l'éclairage et/ou la signalisation (tels que les panneaux, les feux de stop, de position ou de clignotant) conforme(s) au code de la route ou autre règlementation en matière de circulation routière. Une rampe de signalisation, selon la présente invention, est considérée comme assurant cette fonction de base, ce qui la distingue, notamment structurellement, d'autres rampes n'assumant pas cette fonction. D'autre part, il est également rappelé que, lorsqu'une telle rampe de signalisation est montée sur une machine agricole 1, telle qu'une charrue, la rampe de signalisation donne le gabarit en largeur de la machine (à peu près), puisque les feux sont à quelques dizaines de centimètres des extrémités. Par ailleurs, dans la position de travail d'une telle machine 1 agricole du type charrue équipée d'une telle rampe de signalisation, il est encore rappelé que cette dernière est « en contact » avec de la terre soulevée par les corps de labour qui entrent dans le sol, ce qui n'est pas le cas avec d'autres rampes de signalisation destinées à équiper, par exemple, des remorques de bateau.On comprendra que dans la présente demande les termes relatifs à des orientations tels que parallèle, parallèlement, perpendiculaire, perpendiculairement, doivent être interprétés comme signifiant respectivement parallèle, parallèlement, perpendiculaire, perpendiculairement ou sensiblement parallèle, sensiblement parallèlement, sensiblement perpendiculaire, sensiblement perpendiculairement.

Bien entendu, l'invention n'est pas limitée au mode de réalisation décrit et représenté aux dessins annexés. Le domaine de protection de l'invention est défini par les revendications.

## Revendications

1. Rampe de signalisation repliable pour machine (1) agricole, telle qu'une charrue, ladite rampe, d'une part étant apte à être montée à l'arrière d'une telle machine et à être mise dans une configuration déployée en position de transport de ladite machine (1) agricole en s'étendant longitudinalement le long d'un axe, dit axe de rampe (R), horizontal et orienté perpendiculairement à un axe longitudinal d'extension de l'arrière vers l'avant de la machine ou à la direction d'avance (A) de ladite machine (1) et dans une configuration repliée et, d'autre part, présentant, dans la configuration déployée, deux faces latérales opposées parallèles à l'axe de rampe (R), à savoir une face arrière de signalisation définissant un plan de référence et comprenant des moyens de signalisation (S1, S1', S2) et une face avant destinée à assurer la fixation de la rampe sur la machine (1), **caractérisée en ce qu'**elle comprend un support central (2) comportant au moins une extrémité de liaison (20, 21), au moins un bras (3, 3') articulé sur l'extrémité de liaison (20, 21) grâce à au moins une articulation constituée d'une liaison pivot (5, 5', 300, 310, 300', 310') et d'une liaison glissière (5, 5', 300, 310, 300', 310') permettant d'assurer un mouvement combiné du bras (3, 3') successivement en pivotement, au moyen de la liaison pivot (5, 5', 300, 310, 300', 310'), depuis une position déployée du bras (3, 3'), dans la configuration déployée de la rampe, dans laquelle il s'étend parallèlement à l'axe de rampe (R) jusqu'à une position repliée intermédiaire du bras (3, 3') dans laquelle il s'étend du côté de la face arrière perpendiculairement au plan de référence puis, en translation, au moyen de la liaison glissière (5, 300, 310, 5', 300', 310'), dans la direction axiale dudit bras, depuis la position repliée intermédiaire jusqu'à une position repliée finale du bras (3, 3'), dans la configuration repliée de la rampe, dans laquelle il s'étend du côté de la face avant perpendiculairement au plan de référence et réciproquement et des moyens de verrouillage (4, 4') du ou de chaque bras (3, 3') dans sa position déployée et dans sa position repliée finale.

2. Rampe de signalisation, selon la revendication 1, **caractérisée en ce que** la ou chaque extrémité de liaison (20, 21) du support central (2) comprend un pivot (5, 5') autour duquel peut pivoter le bras (3, 3') et étant orienté parallèlement au plan de référence et perpendiculairement à l'axe de rampe (R) et **en ce que** le ou chaque bras (3, 3') comprend au moins une lumière de guidage (300, 310, 300', 310') oblongue traversée par ledit pivot (5, 5') et formant une coulisse apte à coopérer avec ledit pivot (5, 5') pour former la liaison pivot (5, 300, 310, 5', 300', 310') et la liaison glissière (5, 300, 310, 5', 300', 310').

3. Rampe de signalisation, selon la revendication 2, **caractérisée en ce que** le ou chaque bras (3, 3') comprend deux lumières de guidage en vis-à-vis (300, 310, 300', 310') traversées par le pivot (5, 5') autour duquel est articulé le bras (3, 3') et **en ce que** le ou chaque bras (3, 3') consiste en un profilé allongé de section transversale en forme de U dont les deux ailes parallèles forment deux ailes de liaison (30, 31, 30', 31') dans chacune desquelles est pratiquée longitudinalement l'une des deux lumières de guidage (300, 310, 300', 310').

4. Rampe de signalisation, selon l'une quelconque des revendications 2 à 3, **caractérisée en ce que** les moyens de verrouillage (4, 4') consistent en un ou plusieurs éléments de verrouillage, de préférence amovibles, tels que des broches, goujons ou goupilles et **en ce que** ces éléments de verrouillage s'étendent, à l'état de verrouillage, parallèlement au(x) pivot(s) (5, 5').

5. Rampe de signalisation, selon la revendication 4, **caractérisée en ce que** la ou chaque extrémité de liaison (20, 21) du support central (2) comprend deux logements de verrouillage (200, 201, 210, 211), aptes chacun à recevoir le ou l'un des éléments de verrouillage (4, 4'), à savoir un premier logement de verrouillage (200, 210) dédié au verrouillage du bras (3, 3') dans la position déployée et un deuxième logement de verrouillage (201, 211) dédié au verrouillage du bras (3, 3') dans la position repliée finale.

6. Rampe de signalisation, selon l'une quelconque des revendications 1 à 5, **caractérisée en ce que** la ou chaque articulation (5, 300, 310, 5', 300', 310') et la ou chaque extrémité de liaison (20, 21) sont configurées pour permettre en outre une translation du bras (3, 3'), au moyen de la liaison glissière (5, 300, 310, 5', 300', 310'), suivant la direction de l'axe de rampe (R) et vers l'extérieur du support central (2), depuis sa position déployée verrouillée jusqu'à une position déployée déverrouillée de pré-positionnement permettant son pivotement, au moyen de la liaison pivot (5, 300, 310, 5', 300', 310'), vers la position repliée intermédiaire et réciproquement.

7. Rampe de signalisation, selon l'une quelconque des revendications 1 à 6, **caractérisée en ce que** le ou chaque bras (3, 3') comprend une première extrémité (32, 32') et une deuxième extrémité (33, 33') et **en ce que**, en position déployée du ou de chaque bras (3, 3'), la première extrémité (32, 32') est l'extrémité la plus éloignée de l'extrémité de liaison (20, 21) à laquelle est articulé le ou chaque bras (3, 3') et, en position repliée finale du ou de chaque bras (3, 3'), la deuxième extrémité (33, 33') est l'extrémité la plus éloignée de ladite extrémité de liaison (20, 21).

8. Rampe de signalisation, selon la revendication 7, **caractérisée en ce que** la première extrémité (32, 32') du ou de chaque bras (3, 3') porte un élément de signalisation (S1, S1') et **en ce que** la ou chaque extrémité de liaison (20, 21) du support central (2) comporte une plaque de protection (7, 7') s'étendant perpendiculairement à l'axe de rampe (R) de sorte, qu'en position repliée finale du ou de chaque bras (3, 3'), la plaque de protection (7, 7' ) se trouve en regard de l'élément de signalisation (S1, S1') afin de le protéger des chocs et débris éventuels.

9. Rampe de signalisation, selon l'une quelconque des revendications 1 à 8, **caractérisée en ce qu'**il comprend deux bras (3, 3') et deux articulations (5, 300, 310, 5', 300', 310') et **en ce que** le support central (2) comprend deux extrémités de liaison (20, 20'), l'un des deux bras (3) étant articulé, au moyen de l'une des deux articulations (5, 300, 310), sur l'une des deux extrémités de liaison (20) et l'autre bras (3') étant articulé, au moyen de l'autre articulation (5', 300', 310') sur l'autre extrémité de liaison (21).

10. Rampe de signalisation, selon la revendication 9, **caractérisée en ce que** les deux extrémités de liaison (20, 20') sont alignées dans la direction de l'axe de rampe (R) et **en ce que** lesdits bras (3, 3') s'étendent en position déployée de part et d'autre du support central (2).

11. Machine (1) agricole, telle qu'une charrue, ladite machine (1) s'étendant, de l'arrière vers l'avant, le long d'un axe longitudinal et étant apte à être déplacée suivant une direction d'avance (A) et à être mise dans une position de travail et dans une position de transport et étant équipée d'une rampe de signalisation montée à l'arrière de ladite machine (1) **caractérisée en ce que** ladite rampe de signalisation consiste en une rampe de signalisation selon l'une quelconque des revendications 1 à 10 et **en ce que**, en position de transport de la machine (1), le ou chaque bras (3, 3') en position déployée est orienté perpendiculairement à l'axe longitudinal ou à la direction d'avance (A) de la machine (1) et **en ce que**, en position de travail de la machine (1), le ou chaque bras (3, 3') en position repliée finale est orienté vers l'avant parallèlement audit axe longitudinal ou à ladite direction d'avance (A).

12. Machine (1) agricole, selon la revendication 11, **caractérisée en ce que** la rampe de signalisation comprend deux bras (3, 3') et deux articulations (5, 300, 310, 5', 300', 310') tels que définis dans la revendication 9 et **en ce que**, en position de travail de la machine (1), les deux bras (3, 3') orientés vers l'avant sont disposés l'un au-dessus de l'autre.

## Patentansprüche

1. Klappbare Signalisierungsrampe für eine landwirtschaftliche Maschine (1) wie einen Pflug, wobei die Rampe einerseits geeignet ist, hinten an einer solchen Maschine angebracht zu werden und in eine ausgeklappte Ausführung in der Transportposition der landwirtschaftlichen Maschine (1) gebracht zu werden, indem sie sich längs entlang einer Achse, so genannten Rampenachse (R) erstreckt, die horizontal verläuft und senkrecht zu einer Längsausdehnungsachse von der Hinterseite zur Vorderseite der Maschine oder zur Vorschubrichtung (A) der Maschine (1) ausgerichtet ist, und in eine zusammengeklappte Ausführung, und andererseits in der ausgeklappten Ausführung zwei gegenüberliegende Seitenflächen aufweist, die parallel zur Rampenachse (R) verlaufen, nämlich eine hintere Signalisierungsfläche, die eine Bezugsebene definiert und Signalisierungsmittel (S1, S1', S2) umfasst, und eine vordere Fläche, die dazu bestimmt ist, die Befestigung der Rampe auf der Maschine (1) sicherzustellen, **dadurch gekennzeichnet, dass** sie einen Zentralträger (2) umfasst, der wenigstens ein Verbindungsende (20, 21), wenigstens einen Arm (3, 3'), der an dem Verbindungsende (20, 21) dank wenigstens eines Gelenks angelenkt ist, das von einer Schwenkverbindung (5, 5', 300, 310, 300', 310') und einer Gleitverbindung (5, 5', 300, 310, 300', 310') gebildet wird, die es ermöglichen, eine kombinierte Bewegung des Arms (3, 3') in Folge durch Schwenkung mittels der Schwenkverbindung (5, 5', 300, 310, 300', 310') aus einer ausgeklappten Position des Arms (3, 3'), in der ausgeklappten Ausführung der Rampe, in der er sich parallel zur Rampenachse (R) erstreckt, bis in eine zusammengeklappte Zwischenposition des Arms (3, 3'), in der er sich auf der Seite der Hinterfläche senkrecht zur Bezugsebene erstreckt, dann durch Translation mittels der Gleitverbindung (5, 5', 300, 310, 300', 310') in der axialen Richtung des Arms aus der zusammengeklappten Zwischenposition bis in eine zusammengeklappte Endposition des Arms (3, 3'), in der zusammengeklappten Ausführung der Rampe, in der er sich auf der Seite der Vorderfläche senkrecht zur Bezugsebene erstreckt, und umgekehrt, sicherzustellen, und Verriegelungsmittel (4, 4') des oder jedes Arms (3, 3') in seiner ausgeklappten Position und in seiner zusammengeklappten Endposition umfasst.

2. Signalisierungsrampe nach Anspruch 1, **dadurch gekennzeichnet, dass** das oder jedes Verbindungsende (20, 21) des Zentralträgers (2) einen Zapfen (5, 5') umfasst, um welchen der Arm (3, 3') schwenken kann und der parallel zur Bezugsebene und senkrecht zur Rampenachse (R) ausgerichtet ist, und dadurch, dass der oder jeder Arm (3, 3') wenigstens eine Langlochführung (300, 310, 300', 310') umfasst, die von dem Zapfen (5, 5') durchsetzt wird und ein Gleitstück bildet, das geeignet ist, mit dem Zapfen (5, 5') zusammenzuwirken, um die Schwenkverbindung (5, 300, 310, 5', 300', 310') und die Gleitverbindung (5, 300, 310, 5', 300', 310') zu bilden.

3. Signalisierungsrampe nach Anspruch 2, **dadurch gekennzeichnet, dass** der oder jeder Arm (3, 3') zwei gegenüberliegende Lochführungen (300, 310, 300', 310') umfasst, die von dem Zapfen (5, 5') durchsetzt werden, um welchen der Arm (3, 3') angelenkt ist, und dadurch, dass der oder jeder Arm (3, 3') aus einem länglichen Profil mit U-förmigem Querschnitt besteht, dessen zwei parallele Flansche zwei Verbindungsflansche (30, 31, 30', 31') bilden, in denen jeweils eine der zwei Lochführungen (300, 310, 300', 310') längs ausgebildet ist.

4. Signalisierungsrampe nach irgendeinem der Ansprüche 2 bis 3, **dadurch gekennzeichnet, dass** die Verriegelungsmittel (4, 4') aus einem oder mehreren, vorzugsweise abnehmbaren, Verriegelungselementen wie Stiften, Stiftschrauben oder Arretierstiften bestehen, und dadurch, dass sich diese Verriegelungselemente im Verriegelungszustand parallel zu dem(den) Zapfen (5, 5') erstrecken.

5. Signalisierungsrampe nach Anspruch 4, **dadurch gekennzeichnet, dass** das oder jedes Verbindungsende (20, 21) des Zentralträgers (2) zwei Verriegelungsaufnahmen (200, 201, 210, 211) umfasst, die jeweils geeignet sind, das oder eines der Verriegelungselemente (4, 4') aufzunehmen, nämlich eine erste Verriegelungsaufnahme (200, 210), die für die Verriegelung des Arms (3, 3') in der ausgeklappten Position bestimmt ist, und eine zweite Verriegelungsaufnahme (201, 211), die für die Verriegelung des Arms (3, 3') in der zusammengeklappten Endposition bestimmt ist.

6. Signalisierungsrampe nach irgendeinem der Ansprüche 1 bis 5, **dadurch gekennzeichnet, dass** das oder jedes Gelenk (5, 300, 310, 5', 300', 310') und das oder jedes Verbindungsende (20, 21) ausgestaltet sind, des Weiteren eine Translation des Arms (3, 3') mittels der Gleitverbindung (5, 300, 310, 5', 300', 310') gemäß der Richtung der Rampenachse (R) und zum Äußeren des Zentralträgers (2) hin aus seiner verriegelten ausgeklappten Position bis in eine entriegelte ausgeklappte Position zur Vorpositionierung zu ermöglichen, welche sein Schwenken mittels der Schwenkverbindung (5, 300, 310, 5', 300', 310') in die zusammengeklappte Zwischenposition, und umgekehrt, ermöglicht.

7. Signalisierungsrampe nach irgendeinem der Ansprüche 1 bis 6, **dadurch gekennzeichnet, dass** der oder jeder Arm (3, 3') ein erstes Ende (32, 32') und ein zweites Ende (33, 33') umfasst und dadurch, dass in ausgeklappter Position des oder jedes Arms (3, 3') das erste Ende (32, 32') das von dem Verbindungsende (20, 21), an welchem der oder jeder Arm (3, 3') angelenkt ist, am weitesten entfernte Ende ist, und in zusammengeklappter Endposition des oder jedes Arms (3, 3') das zweite Ende (33, 33') das von dem Verbindungsende (20, 21) am weitesten entfernte Ende ist.

8. Signalisierungsrampe nach Anspruch 7, **dadurch gekennzeichnet, dass** das erste Ende (32, 32') des oder jedes Arms (3, 3') ein Signalisierungselement (S1, S1') trägt und dadurch, dass das oder jedes Verbindungsende (20, 21) des Zentralträgers (2) eine Schutzplatte (7, 7') umfasst, die sich senkrecht zur Rampenachse (R) erstreckt, sodass sich in zusammengeklappter Endposition des oder jedes Arms (3, 3') die Schutzplatte (7, 7') gegenüber dem Signalisierungselement (S1, S1') befindet, um es vor Stößen und eventuellen Ernterückständen zu schützen.

9. Signalisierungsrampe nach irgendeinem der Ansprüche 1 bis 8, **dadurch gekennzeichnet, dass** sie zwei Arme (3, 3') und zwei Gelenke (5, 300, 310, 5', 300', 310') umfasst und dadurch, dass der Zentralträger (2) zwei Verbindungsenden (20, 20') umfasst, wobei einer der zwei Arme (3) mittels eines der zwei Gelenke (5, 300, 310) an einem der zwei Verbindungsenden (20) angelenkt ist und der andere Arm (3') mittels des anderen Gelenks (5', 300', 310') an dem anderen Verbindungsende (21) angelenkt ist.

10. Signalisierungsrampe nach Anspruch 9, **dadurch gekennzeichnet, dass** die zwei Verbindungsenden (20, 20') in der Richtung der Rampenachse (R) ausgerichtet sind und dadurch, dass sich die Arme (3, 3') in ausgeklappter Position beidseits des Zentralträgers (2) erstrecken.

11. Landwirtschaftliche Maschine (1) wie ein Pflug, wobei sich die Maschine (1) von hinten nach vorne entlang einer Längsachse erstreckt und geeignet ist, gemäß einer Vorschubrichtung (A) befördert zu werden und in eine Arbeitsposition und in eine Transportposition gebracht zu werden, und mit einer Signalisierungsrampe ausgestattet ist, die hinten an der Maschine (1) angebracht ist, **dadurch gekennzeichnet, dass** die Signalisierungsrampe aus einer Signalisierungsrampe nach irgendeinem der Ansprüche 1 bis 10 besteht und dadurch, dass in Transportposition der Maschine (1) der oder jeder Arm (3, 3') in ausgeklappter Position senkrecht zur Längsachse oder zur Vorschubrichtung (A) der Maschine (1) ausgerichtet ist und dadurch, dass in Arbeitsposition der Maschine (1) der oder jeder Arm (3, 3') in zusammengeklappter Endposition nach vorne parallel zur Längsachse oder zur Vorschubrichtung (A) ausgerichtet ist.

12. Landwirtschaftliche Maschine (1) nach Anspruch 11, **dadurch gekennzeichnet, dass** die Signalisierungsrampe zwei Arme (3, 3') und zwei Gelenke (5, 300, 310, 5', 300', 310'), wie in Anspruch 9 definiert, umfasst und dadurch, dass in Arbeitsposition der Maschine (1) die zwei nach vorne ausgerichteten Arme (3, 3') übereinander angeordnet sind.

## Claims

1. Foldable signal ramp for agricultural machine (1), such as a plough, the said ramp, on one hand being able to be mounted on the rear of such a machine and to be put into an unfolded configuration in the transport position of the said agricultural machine (1) by extending longitudinally along an axis, known as the ramp axis (R) which is horizontal and oriented perpendicularly to a longitudinal axis extending from the rear towards the front of the machine or to the direction of advance (A) of the said machine (1) and in a folded configuration and, on the other hand, presenting, in the unfolded configuration, two opposite side faces parallel to the ramp axis (R), namely one rear warning face defining a reference plane and including warning means (S1, S1', S2) and one front face intended to ensure the coupling of the ramp onto the machine (1), **characterised in that** it includes a central support (2) with at least one connection end (20, 21), at least one arm (3, 3'), articulated to the connection end (20, 21) thanks to at least one joint comprising a pivot connection (5, 5', 300, 310, 300', 310') and a slide connection (5, 5', 300, 310, 300', 310') allowing a combined movement of the arm (3, 3') successively in pivoting movement, by means of the pivot connection (5, 5', 300, 310, 300', 310'), from an unfolded position of the arm (3, 3'), in the unfolded configuration of the ramp, in which it extends parallel to the ramp axis (R) into an intermediate folded position of the arm (3, 3') in which it extends on the side of the rear face perpendicularly to the reference plane and then, in translation, by means of the slide connection (5, 300, 310, 5', 300', 310'), in the axial direction of the said arm, from the intermediate folded position into a final folded position of the arm (3, 3'), in the folded configuration of the ramp, in which it extends on the side of the front face perpendicularly to the reference plane and reciprocally and of the locking means (4, 4') of the arm or of each arm (3, 3') in its unfolded position and in its final folded position.

2. Signal ramp, according to claim 1, **characterised in that** the connection end or each connection end (20, 21) of the central support (2) includes a pivot (5, 5') around which the arm (3, 3') can pivot and which is oriented parallel to the reference plane and perpendicularly to the ramp axis (R) and **in that** the arm or each arm (3, 3') includes at least one oblong slotted guide hole (300, 310, 300', 310') passed through by the said pivot (5, 5') and forming a slide able to cooperate with the said pivot (5, 5') to form the pivot connection (5, 300, 310, 5', 300', 310') and the slide connection (5, 300, 310, 5', 300', 310').

3. Signal ramp, according to claim 2, **characterised in that** the arm or each arm (3, 3') includes two slotted guide holes facing each other (300, 310, 300', 310') passed through by the pivot (5, 5') around which the arm (3, 3') is articulated and **in that** the arm or each arm (3, 3') consists of an elongated profile with a U-shaped transverse cross-section, whose two parallel flanges form two link flanges (30, 31, 30', 31') in each of which is made, longitudinally, one of the two slotted guide holes (300, 310, 300', 310').

4. Signal ramp, according to any of claims 2 to 3, **characterised in that** the locking means (4, 4') consist of one or more locking elements, preferably removable, such as pins, stud bolts or cotter pins and **in that** these locking elements extend, in the locked state, parallel to the pivot(s) (5, 5').

5. Signal ramp, according to claim 4, **characterised in that** the connection end or each connection end (20, 21) of the central support (2) includes two lock housings (200, 201, 210, 211) each of which is able to receive the locking element or one of the locking elements (4, 4'), namely a first lock housing (200, 210) dedicated to locking the arm (3, 3') in the unfolded position and a second lock housing (201, 211) dedicated to locking the arm (3, 3') in the final folded position.

6. Signal ramp, according to any one of claims 1 to 5, **characterised in that** the joint or each joint (5, 300, 310, 5', 300', 310') and the connection end or each connection end (20, 21) are configured to allow, furthermore, a translation of the arm (3, 3'), by means of the slide connection (5, 300, 310, 5', 300', 310'), along the direction of the ramp axis (R) and towards the outside of the central support (2), from its locked unfolded position into an unlocked unfolded pre-positioning position enabling it to pivot, by means of the pivot connection (5, 300, 310, 5', 300', 310'), into the intermediate folded position and reciprocally.

7. Signal ramp, according to any one of claims 1 to 6, **characterised in that** the arm or each arm (3, 3') includes a first end (32, 32') and a second end (33, 33') and **in that**, in the unfolded position of the arm or each arm (3, 3'), the first end (32, 32') is the end furthest away from the connection end (20, 21) to which the arm or each arm (3, 3') is articulated and, in the final folded position of the arm or each arm (3, 3'), the second end (33, 33') is the end furthest away from the said connection end (20, 21).

8. Signal ramp, according to claim 7, **characterised in that** the first end (32, 32') of the arm or of each arm (3, 3') carries a warning element (S1, S1') and **in that** the connection end or each connection end (20, 21) of the central support (2) includes a protection plate (7, 7') extending perpendicularly to the ramp axis (R) such that, in the final folded position of the arm or of each arm (3, 3'), the protection plate (7, 7') is opposite the warning element (S1, S1') in order to protect it from any shocks and debris.

9. Signal ramp, according to any one of claims 1 to 8, **characterised in that** it includes two arms (3, 3') and two joints (5, 300, 310, 5', 300', 310') and **in that** the central support (2) includes two connection ends (20, 20'), one of the two arms (3) being articulated, by means of one of the two joints (5, 300, 310), on one of the two connection ends (20) and the other arm (3') being articulated, by means of the other joint (5', 300', 310') on the other connection end (21).

10. Signal ramp, according to claim 9, **characterised in that** the two connection ends (20, 20') are aligned in the direction of the ramp axis (R) and **in that** the said arms (3, 3') extend in unfolded position on either side of the central support (2).

11. Agricultural machine (1), such as a plough, the said machine (1) extending, from the rear towards the front, along a longitudinal axis and being able to be moved in a direction of advance (A) and to be placed in a working position and in a transport position and being equipped with a signal ramp mounted on the rear of the said machine (1) **characterised in that** the said signal ramp consists of a signal ramp according to any one of claims 1 to 10 and **in that**, in the transport position of the machine (1), the arm or each arm (3, 3') in unfolded position is oriented perpendicularly to the longitudinal axis or to the direction of advance (A) of the machine (1) and **in that**, in the working position of the machine (1), the arm or each arm (3, 3') in final folded position is oriented towards the front, parallel to the said longitudinal axis or to the said direction of advance (A).

12. Agricultural machine (1), according to claim 11, **characterised in that** the signal ramp includes two arms (3, 3') and two joints (5, 300, 310, 5', 300', 310') as defined in claim 9 and **in that**, in the working position of the machine (1), the two arms (3, 3') oriented towards the front are arranged one above the other.
